(19)

**Europäisches Patentamt**

**European Patent Office**

**Office européen des brevets**

(11) **EP 4 672 665 A1**

(12) **EUROPEAN PATENT APPLICATION**

(43) Date of publication:
**31.12.2025 Bulletin 2026/01**

(21) Application number: **25185869.2**

(22) Date of filing: **27.06.2025**

(51) International Patent Classification (IPC):
**H04L 9/06** *(2006.01)*

(52) Cooperative Patent Classification (CPC):
**H04L 9/0643;** H04L 2209/04; H04L 2209/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **28.06.2024 US 202418759152**

(71) Applicants:
• **Lemon Inc.
Grand Cayman, KY1-1205 (KY)**
• **Beijing Zitiao Network Technology Co., Ltd.
Beijing 100190 (CN)**

(72) Inventors:
• **ZHANG, Wanrong
Culver City, 90230 (US)**
• **JIANG, Bo
Culver City, 90230 (US)**
• **LU, Donghang
Culver City, 90230 (US)**
• **DU, Jian
Culver City, 90230 (US)**
• **YAN, Qiang
Beijing, 100028 (CN)**

(74) Representative: **Marks & Clerk LLP
15 Fetter Lane
London EC4A 1BW (GB)**

(54) **METHOD FOR EVALUATING THE ACCURACY OF LDP PROTOCOLS**

(57) Methods, systems, and apparatus, including computer programs encoded on computer storage media, for evaluating a protocol for hashing data on client devices. One of the methods includes obtaining (202) a size of a hashing domain for one or more hash functions, each configured to process source data to generate an output value; obtaining (204) a probability of including each output value in a corresponding message; obtaining (206) a differential privacy parameter; and generating (208) a variance of the quantity of times the source data was a cause of a message over the one or more hash functions using the size of the hashing domain, the probability, and a value based on the differential privacy parameter.

FIG. 1

EP 4 672 665 A1

**Description**

BACKGROUND

Various systems can communicate over a network. For instance, a client device can send data to a server device, e.g., a cloud computing server. The data communicated over the network can be encrypted to increase data privacy, data security, or both.

SUMMARY

Some client devices can transmit data to a recipient processing system, e.g., a server or a cloud system, for analysis. Sending plain text data can have privacy concerns, security concerns, or both. For instance, a malicious actor can access the data before it is received by the recipient processing system. In some examples, the recipient processing system shouldn't be allowed access to data that is not anonymized, e.g., given user permissions.

To increase data security, reduce communication cost, or both, a client device can perform one or more local differential privacy (LDP) operations on data for transmission. This can include generating a result using a hash function, adding the result to an output vector, and introducing noise into the output vector. In some examples, the client device can select a hash function, randomly permute locations of values in the output vector, or a combination of both. The client device can transmit the output vector, e.g., an encrypted output vector, to the recipient processing system.

The recipient processing system can decrypt the output vector and extract one or more values from the decrypted vector. The recipient processing system can use an identifier for the hash function to determine a mapping to one or more original values, e.g., that are potential inputs to the hash function that can cause generation of the result. The recipient processing system can update values of a matrix of values using the output vector. For instance, the matrix can include combinations of values from multiple different client devices. The combination of values can represent a total count of output vectors that included values that mapped to corresponding locations in the matrix. The recipient processing system can then use the matrix to perform one or more operations, e.g., given a number of client devices that had particular values in their corresponding output vectors.

The client device and recipient processing system can follow an LDP protocol. For example, the client device can select a hash function out of multiple hash functions. In some examples, the client device can add the result of the hash function to an output vector according to a probability of including the result in the output vector. Parameters of the LDP protocol, such as the number of hash functions or the size of the hashing domain for the hash functions, can have been selected by evaluating different LDP protocols. For example, the recipient processing system can determine the variance of the quantity of times the data input to the hash function was a cause of a message over the multiple hash functions. The recipient processing system can use the variance to select one or more parameters for the LDP protocol.

The subject matter described in this specification can be implemented in various implementations and may result in one or more of the following advantages. In some implementations, the systems and methods described in this specification can have a reduced computation cost for determining the accuracy of a particular LDP protocol. For example, in some conventional systems, to evaluate the accuracy, e.g., the variance, of a particular LDP protocol, the operations of the particular LDP protocol are performed for different source data, and the process of generating a prediction of the quantity of times a source data was the cause of a message is performed repeatedly for different source data, consuming a large amount of computing time and resources. In addition, to evaluate the accuracy of different LDP protocols using the conventional systems, the conventional systems require performing the operations of each of the different LDP protocols. The system described in this specification provides for a more rigorous and computationally efficient way to evaluate the accuracy of different LDP protocols with different parameters, without having to perform the operations of the different LDP protocols. For example, the system described in this specification can evaluate the performance of LDP protocols with different parameters such as the probability for including the output value in a message, or for different numbers of hash functions or hash domain sizes.

In some implementations, the systems and methods described in this specification can also be used as an unbiased estimator for different LDP protocols. For example, after performing the operations of each of the different LDP protocols, the system described in this specification can predict a quantity of times a source data was the cause of a message over the hash function(s) for each of the different LDP protocols. The system described in this specification can further use the predicted quantity of times the source data was the cause of a message over the hash function(s) for a particular LDP protocol to determine the accuracy of the particular LDP protocol.

The details of one or more implementations of the subject matter described in this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 depicts an example environment in which one or more client devices provide data to a processing system using local differential privacy.

FIG. 2 is a flow diagram of an example process for evaluating a protocol.

FIG. 3 is a block diagram of computing devices that may be used to implement the systems and methods described in this specification.

Like reference numbers and designations in the various drawings indicate like elements.

DETAILED DESCRIPTION OF EMBODIMENTS

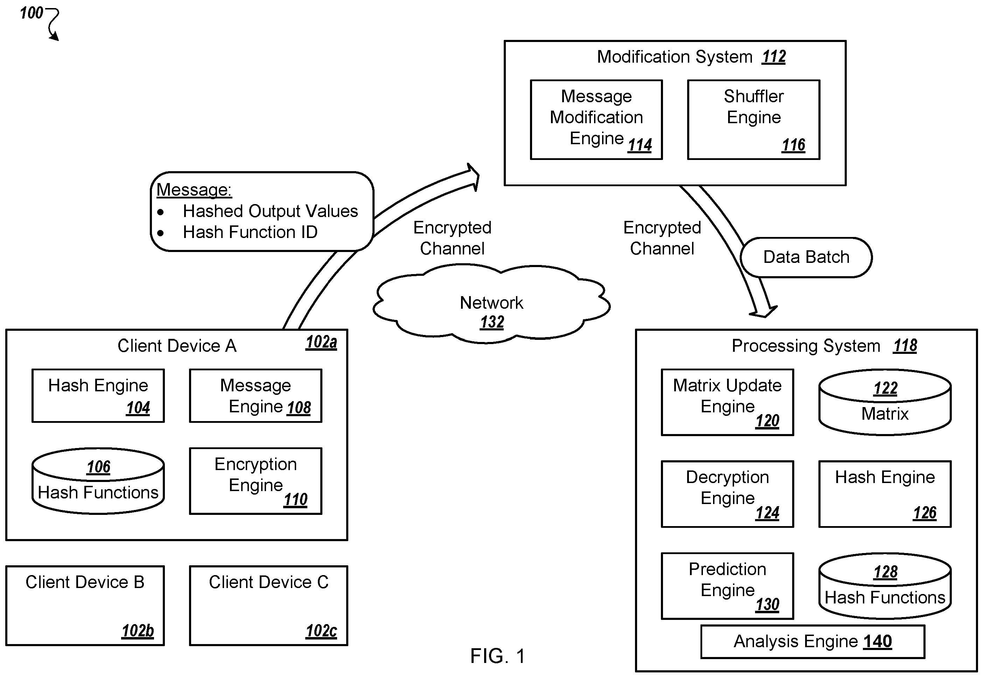

FIG. 1 depicts an example environment 100 in which one or more client devices 102a-c provide data to a processing system 118 using local differential privacy. The client devices 102a-c can use one or more local differential privacy ("LDP") operations to increase security of data transmitted to the processing system 118, reduce a communication cost of the transmission, e.g., in network bandwidth or other computational resources, or a combination of both.

The client devices 102a-c can follow an LDP framework to mask some of the data for transmission to the processing system 118. The masking can cause the data to be anonymized before the data is transmitted by the respective client devices 102a-c. Compared to other systems in which the masking is performed by the processing system 118 or not performed at all, masking by the client devices 102a-c can increase data security and, as a result, data privacy by reducing a likelihood that a bad actor will be able to determine the specific data that is specific to a corresponding client device 102a-c.

The masking can include any appropriate operations on source data. For instance, the client devices 102a-c can generate noise data and combine the noise data with the source data. The client devices 102a-c can send the combined data to the processing system 118 for processing. Although the processing system 118 won't have only the source data, but will also have the noise data, the processing system 118 will still be able to process the combined data such that a utility of the results is substantially similar to a utility of processing results for the source data alone.

The client device A 102a, as an example of the client devices A-C 102a-c, includes a message engine 108. The message engine can generate a message by combining an output value, as an example of the source data, with one or more noise values. The output value can be any appropriate type of output, such as an output of an application executing on the client device A 102a.

An encryption engine 110 can encrypt the message for transmission to the processing system 118. The encryption engine 110 can use any appropriate process for encrypting the message.

The client device A 102a can transmit the encrypted message to the processing system 118. The processing system 118 receives the encrypted message. The processing system 118 can decrypt the encrypted message, e.g., using any appropriate process that corresponds to the encryption process.

The processing system 118 can use a prediction engine 130 to predict outputs given the data from the decrypted message. For instance, given a number of messages, e.g., included in a data batch, received from different ones of the client devices A-C 102a-c, all of which include at least some noise, the prediction engine 130 can make one or more inferences using the data batch. The processing system 118 can perform one or more actions using the one or more inferences.

The processing engine 118 can use an analysis engine 140 to evaluate the performance of different LDP protocols. For example, given a set of parameters for an LDP protocol, the system can make one or more inferences for the LDP protocol. The processing system 118 can perform one or more actions using the one or more inferences. In some examples, the processing system 118 can make one or more inferences for the LDP protocol using an output, e.g., a predicted quantity of times $\hat{f}(d)$ the source data $d$ was the cause of a message received from one of the client devices 102a-c, from the prediction engine 130, as described in further detail below.

In some implementations, the environment 100 includes a modification system 112. The environment 100 can use the modification system 112 to increase data security, privacy, or both. For instance, the client device A 102a can provide the encrypted message to the modification system 112.

The modification system 112 includes a message modification engine 114. The message modification engine 114 removes data from the received message, e.g., to increase data security, privacy, or both. For instance, the message modification engine 114 can generate a second encrypted message that includes the encrypted body of the previous message but without any data that is specific to the client device A 102a from which the encrypted message was received, e.g., without any device A specific data. In this way, the second encrypted message can be further anonymized compared to the anonymized encrypted message. The message modification engine 114 can remove any device identifiers or other types of data that could potentially be used to associate the encrypted body of the message with the source client device A 102a. In some examples, the message modification engine 114 removes a header from the encrypted message to generate the second encrypted message that only includes the encrypted data from the body of the encrypted message.

The modification system 112 can include a shuffler engine 116 that randomly shuffles the second encrypted messages. For example, the modification system 112 can receive n encrypted messages from various client devices 102a-c. The modification system 112 can receive more than one message from some of the client devices 102a-c. The modification system 112 can receive a single message or no messages from some of the client devices 102a-c.

The shuffler engine 116 can, e.g., randomly, change the order in which the second encrypted messages are included in a data batch. For instance, as the modification system 112 receives encrypted messages, the modification system 112 can add the encrypted messages to a data batch, e.g., with a maximum size n, in an order in which the encrypted messages are received. When the modification system 112 determines that a transmission criterion is satisfied, e.g., a time criterion or the data batch includes the maximum size n of encrypted messages, the shuffler engine 116 changes the order in which the encrypted messages are included in the data batch to a second order that is different from the received in order. For example, the shuffler engine 116 can randomly change the order of two or more messages in the data batch, e.g., using any appropriate random permutation operations such as entry-by-entry brute force or Fisher-Yates.

In some examples, the modification system 112 can discard a message received from one of the client devices 102a-c. For instance, upon receiving a message from the client device A 102a, the modification system 112 can determine whether a number of messages received from the client device A 102a satisfies a message threshold, e.g., a maximum number of messages that can be received from any client device. If the threshold is not satisfied, the modification system 112 can process the message, e.g., using one or both of the message modification engine 114 or the shuffler engine 116.

If the threshold is satisfied, the modification system 112 can determine to skip processing the message. This can include deleting the data for the message from memory. By determining to skip processing the message, the modification system 112 can increase data security, e.g., reducing a likelihood that sensitive data for the client device A 102a might be inferred by the processing system 118. By determining to skip processing the message, the modification system 112 can reduce a likelihood of a data poisoning attack affecting any analysis by the processing system 118, e.g., destroying the aggregation in the data batch.

The processing system 118 can receive the data batch from the modification system 112. The processing system 118 can process the encrypted messages included in the data batch, e.g., as described above.

In some implementations, after decrypting the encrypted messages, e.g., from the data batch and using the decryption engine 124, a matrix update engine 120 included in the processing system 118 can update a matrix 122 using data from the decrypted message. For instance, the decrypted message, e.g., the combined data generated by the client device A 102a, can identify one or more locations in the matrix 122 that should be updated. The matrix 122 can include one entry for each of a fixed number of values generated by the client devices 102a-c, whether the values are the original output values or noise values. The values can represent any appropriate type of data, such as data generated by an application executing on the respective client device 102a-c, e.g., a social media application. In some examples, the values can represent a search string, a uniform resource identifier ("URI"), a website, a news article, or other appropriate types of data for an application on the client device 102a-c. For example, each location in the matrix 122 can indicate a number of times that the corresponding location was identified in a decrypted message. When the matrix 122 has one hundred locations, the fifteenth location can indicate a number of times that location was identified in a decrypted message. For instance, when a value at the fifteenth location is sixty-five, that indicates that sixty-five decrypted messages from any combination of client devices 102a-c identified the fifteenth location.

The environment 100 can be configured to perform operations for any of a variety of LDP protocols. Different LDP protocols can have different parameters. For example, different LDP protocols can have different probabilities that the output value is included in a message for the processing system 118. Different LDP protocols can also have different hash functions, different numbers of hash functions, or different hashing domain sizes.

Some systems generate the combined data that includes both the output value and one or more noise values using unary encoding. In these systems, when the matrix 122 has m locations, and the values can be binary values that indicate whether the corresponding location is true, e.g., the corresponding URI was accessed or search string was used. Although combined data with m locations using unary encoding can maintain accuracy, transmission of a message with length m can use more computational resources than necessary, e.g., for the processing by the processing system 118. Further, although there can be a large variety of potential source data used to determine the output value, e.g., when the potential source data might be any of an infinite number of values such as URIs, the message itself cannot have an infinite length.

To reduce a size of the message, the client devices 102a-c can use a hash engine 104 to map an input domain for the source data from a large domain to a smaller, finite domain M. For instance, the hash engine 104 can map source data d to an output value in the finite domain M. The output value can be an integer that is limited by the domain M, e.g., in $\{1, \ldots, m\}$ or $\{0, \ldots, m-1\}$. Here, m can denote the hashing range and M can represent the hashing domain.

The message engine 108 can determine whether to include the output value in a message for the processing system 118. This can increase data security for the source data since the message might not always have a value for the actual source data. For instance, the message engine 108 can determine with a probability, p, of 0.5 whether to include the output value in the message.

The message engine 108 can generate the message using a result of the determination whether to include the output value in the message. For instance, when the message engine 108 determines to include the output value in the message and given a size s for the message, the message engine 108 can determine to generate s-1 noise values. When the message engine 108 determines to not include the output value in the message and given the size s for the message, the message engine 108 can determine to generate s noise values.

The message engine 108 can select one or more noise values, e.g., from an extension domain $M_{\bar{r}}$. When the domain of output values is M = {1, ..., m} and for an output value of r, the extension domain $M_{\bar{r}}$ can be {1, 2, ... , r - 1, r + 1, . . . , m}. The message engine 108 can use any appropriate process to select the one or more noise values. For instance, the message engine 108 can receive the output value r from the hash engine 104. The message engine 108 can compute the extension domain $M_{\bar{r}}$ using the domain M and the output value r. The message engine 108 can randomly select the noise values from the extension domain $M_{\bar{r}}$, e.g., given the determined number of noise values to select as either s or s-1.

The message engine 108 can generate a message for the processing system 118. The message can include any appropriate type of data structure that includes the one or more noise values and optionally the output value. For instance, the message engine 108 can generate an empty list v as the data structure. When including the output value r in the message, the message engine 108 can append the output value r to the empty list v. The message engine 108 can append the one or more noise values to the list v, whether v is an empty list or not.

In some examples, the message engine 108 can randomly permute the list v. For instance, when the output value r is appended to the beginning of the empty list v, the message engine 108 can determine to randomly permute the list v so that the order in which the values appear in the list v is less likely to indicate anything about the source data. The message engine 108 can determine to skip randomly permuting the list v when the list v does not include the output value r.

The encryption engine 110 can generate an encrypted message using the list v as the body of the message, e.g., and a public encryption key. For instance, the body of the message can include an encrypted version of the hashed output value r as a value in the list v.

Communications between the client devices 102a-c and the processing system 118 can use one or more encrypted channels. For instance, the communications can use a network 132 through which the messages, e.g., encrypted messages, are passed. The client devices 102a-c can each create a corresponding encrypted channel with the processing system 118, or the modification system 112 for implementations that include the modification system 112. The client devices 102a-c can then use the encrypted channels to transmit the messages to a corresponding destination, e.g., the modification system 112 or the processing system 118.

The processing system 118 receives the message that includes the list v. For instance, the processing system 118 can receive the encrypted message that encrypts the list v from either the client device A 102a, e.g., as a single message, or from the modification system 112, e.g., as a message in the data batch. The decryption engine 124 can decrypt the encrypted message, e.g., using a secret key.

The matrix update engine 120 updates the matrix 122 using data from the message, e.g., the decrypted message. When the output values are values in the domain M, the matrix 122 can have m values each of which correspond to a value in the domain M. For instance, the $i^{th}$ value in the domain M corresponds to the $i^{th}$ value in the matrix 122. In some examples, the matrix update engine 120 can add one to an existing value in the matrix at locations that are identified in the message. For example, when the message includes the value i, the matrix update engine 120 can add one to the existing value at the $i^{th}$ location in the matrix, e.g., matrix[i] = matrix[i] + 1.

When the matrix update engine 120 determines that the matrix 122 does not exist, the matrix update engine 120 can initialize the matrix 122. For instance, the matrix update engine 120 can initialize the matrix to be an array of length m with each value in the array being zero.

The processing system 118 can determine to perform one or more actions using data in the matrix 122. For example, when the processing system 118 determines to perform an operation using a value d, the processing system 118 causes a hash engine 126 to compute a hash of the value d, e.g., the output value r. The hash engine 126 at the processing system 118 uses the same hash operations as the hash engine 104 at the client device A 102a so that the output values are the same for any given input value.

A prediction engine 130 determines a value in the matrix 122 for the output value r. For instance, the prediction engine 130 receives the output value r from the hash engine 126. The prediction engine 130 accesses the matrix 122 and determines the value C(d) stored in the matrix 122 for the output value r, e.g., a total count stored in the $r^{th}$ location of the matrix 122.

The prediction engine 130 uses the value stored in the matrix 122 for the output value r to predict a quantity of times $\hat{t}(d)$ the source data was the cause of a message received from one of the client devices 102a-c. The prediction engine 130 can use equation (1), below, to predict the quantity of times $\hat{t}(d)$ the source data was the cause of a message received from one of the client devices 102a-c. That is, the prediction engine 130 can predict the quantity of times $\hat{t}(d)$ that a message corresponds to or was generated for the particular source data d.

In equation (1), p can be the probability that the output value r is included in the message, e.g., 0.5 or another appropriate value. In some examples, p can be computed using equation (2), below. As indicated above, n is the number of messages included in the data batch and m is the number of values in the domain M. As another example, p can represent the probability that a source data $x_1$ is mapped to its own support set. The support set of the source data $x_1$ is the set of messages that can have been caused by the source data $x_1$.

The variable q can be a value based on a differential privacy parameter, e.g., computed using equation (3), or another appropriate equation, below. q can represent the probability that a source data $x_2$ =/= $x_1$ is mapped to $x_1$'s support set. That is, q represents the probability that the source data $x_2$ is the cause of a message that can have been caused by the source data $x_1$. $\varepsilon$ can be the differential privacy parameter that represents a degree of security for the messages, the output values included in the messages, or both. In some instances, one or both of equations (2) and (3) can be used for a value of $\varepsilon$ that satisfies, e.g., is great than or equal to, a threshold value, e.g., a large $\varepsilon$ value.

$$\hat{f}(d) = \frac{C(d) - \frac{pn}{m} - qn\left(1 - \frac{1}{m}\right)}{(p-q)\left(1 - \frac{1}{m}\right)} \qquad (1)$$

$$p = \frac{e^{\varepsilon}}{(e^{\varepsilon}+1)} \qquad (2)$$

$$q = \frac{1}{(e^{\varepsilon}+1)} \qquad (3)$$

The processing system 118 can perform one or more additional actions using the predicted quantity of times $\hat{f}(d)$ the source data was the cause of a message received from one of the client devices 102a-c. For example, the processing system 118 can perform analytics using the predicted quantity of times $\hat{f}(d)$, generate instructions that cause presentation of the predicted quantity of times $\hat{f}(d)$, or perform another appropriate action.

The processing system 118 can use equation (1) to predict the quantity of times $\hat{f}(d)$ to reduce an influence of the noise values on the data in the matrix 122. For instance, since the combined data that was the basis of the message body includes one or more noise values and optionally the output value, use of equation (1) can improve an accuracy of the predicted quantity of times $\hat{f}(d)$ compared to using the value C(d) stored in the matrix 122, e.g., the total count value.

In some implementations, the environment 100 can use multiple hash functions, each for a different message from multiple messages. Some messages from the multiple messages can include output values generated using the same hash function.

For example, the client device A 102a, and each of the other client devices B-C 102b-c, can maintain a database of hash functions 106. When determining to send a message to the processing system 118, the hash engine 104 can select one of the multiple hash functions from the hash functions database 106. This can increase an accuracy of the data received by the processing system 118, and any actions performed using the data, by reducing a number of the same collisions that can occur when using a single hash function. For instance, when using a single hash function, two source data values, X and Y, can result in the same output value $r_1$. By using two or more different hash functions, some of the hash functions might have a collision in which both X and Y result in the same output value r while others will not. For example, some hash functions will map X to $r_2$ and Y to $r_3$. As a result, the processing system 118 can process more accurate data since all instances of X and Y will not map to the same output value $r_1$.

The processing system 118 or another system or combination of systems can generate the hash functions. For instance, the processing system 118 can generate k independent hash functions H = {$h_1$, $h_2$, ... , $h_k$}. Each hash function can deterministically map a respective source data value d, e.g., any input value, to a discrete number in the domain M. For a particular LDP protocol, the k independent hash functions have the same hashing domain size, i.e., have the same hashing range m. In some examples, hash functions of different LDP protocols can have a corresponding domain M at least some of which have a different hashing range m, e.g., $h_1$ can have the domain $M_1$, $h_2$ can have the domain $M_2$, and so on with some domains $M_i$ not equal to others $M_j$.

The processing system 118 can select at least some of the hash functions h that satisfy one or more generation criteria. Some generation criteria can require that a hash function h has a number of collisions that satisfies a collision criterion, e.g., as few collisions as possible. This can reduce utility loss by the processing system 118 when the processing system 118 processes the messages. In some examples, the generation criteria can require that hash function h has a substantially uniform random output distribution, e.g., reducing a likelihood that a collision occurs for high frequency source data d.

In some implementations, the processing system 118 can generate a hash function that maps URIs, e.g., web uniform resource locators ("URLs"). For source data x, the processing system can generate a hash function $h(d) : D \to [m]$ for which the support of D can be infimum.

The processing system 118 can perform one or more encoding operations. For instance, given a web URL as the input source data, the processing system can determine an encoding scheme to convert the web URLs into bits. For instance, the processing system can determine to apply ASCII encoding where every character in the web URL is mapped to a seven-bit value. The processing system can treat the resulting value as a big number.

The processing system 118 can determine a hash function, e.g., $h_k$ (d) = d + k mod m. The processing system 118 can determine the hash function $h_k$ (d) if the input domain is substantially, e.g., almost, uniformly distributed, e.g., as defined by a threshold criterion.

When the input domain is not uniformly distributed, e.g., since most URLs have a "www" prefix, the processing system 118 can provide the web URL to a cryptographic hash function such as SHA256, so that the output is a 256-bit random value. The processing system 118 can then apply a mod function on to the output to further reduce the range of the output, e.g., $h_k$ (d) = SHA-256(d) mod m. This can provide a more uniform distribution for non-uniformly distributed source data.

The processing system 118 can generate k hash functions as described above. The processing system 118 can maintain each of the k hash functions in its own hash function database 128. The processing system 118 can send one or more of the k hash functions to each of the client devices A-C 102a-c, e.g., along with its public key for encrypting the messages.

When the processing system 118 provides a different hash function to each of the client devices A-C 102a-c, and only one hash function, the processing system 118 can maintain a mapping that indicates which hash function was provided to which client device A-C 102a-c. Upon receiving a message from one of the client devices A-C 102a-c, the processing system 118 can use the mapping to determine which hash function was used to generate data in the message.

When the processing system 118 provides multiple hash functions to at least some of the client devices A-C 102a-c, the client devices A-C 102a-c can include a hash function identifier in the messages they generate. For instance, when there are three hash functions, the client device A's 102a message engine can generate a message that includes both the combined data for the noise values and optionally the output value and an identifier for the one of the three hash functions used to generate the values. The client device A 102a would use the same hash function to generate all of the values for any particular message. The encryption engine 110 can then encrypt the hashed output values and the hash function identifier for transmission to the processing system.

When the processing system 118 receives values that can be generated using any of multiple hash functions, the processing system 118 maintains the matrix 122 as a three-dimensional data structure, e.g., array. For instance, the matrix can have a first array indexed by the hash function from the k hash functions. That first array can identify, for each hash function, a corresponding second array for the output values of that respective hash function. The second arrays can have a dimension m given the domain M. In implementations in which the domain's M vary given the hash function h, the second arrays can have different dimensions $m_k$. In implementations in which all of the hash functions have the same domain M, all of the second arrays can have the same dimension m.

When the processing system 118 processes a received message, whether a singular message or a message from the data batch, the processing system can determine the hash function $h_j$ that applies to the message. The processing system 118 can then update the data structure for that corresponding hash function $h_j$. For instance, for the matrix M, the hash function $h_j$, and the value i from the message, the processing system 118 can update the location at M[j][i], e.g., M[j][i] = M[j][i] + 1.

The messages have a size s that is smaller than the size of the domain M for the hash function. The domain M for the hash function is smaller than the size of all possible values for the source data d.

The message size s can be any appropriate value, determined by any appropriate device or system, or a combination of these. In some implementations, the client device A 102a select the message size s. In these implementations, the client device A 102a provides the message size to the processing system 118, e.g., as part of the message, or the processing system 118 can determine the message size s using data for the message, e.g., a number of entries in the message body. In some implementations, the processing system 118 determines the message size s and provides data that indicates the message size s to a respective client device 102a. At least some of the client devices 102a-c can have the same message size s. At least some of the client devices 102a-c can have different message sizes s.

The message size s can be determined using any appropriate process. For instance, the message size can be computed using a differential privacy parameter $\varepsilon$. In some examples, the message size can be determined using equation (4) below for which m is the hashing range for the domain M.

$$s = \frac{\mathrm{m}}{(e^{\varepsilon}+1)} \tag{4}$$

When the environment 100 uses different message sizes s for different devices 102a-c, the different message sizes s can be based on different hashing ranges m, different differential privacy parameters $\varepsilon$, or a combination of both.

In implementations where the environment 100 uses k hash functions, i.e., the particular LDP protocol implemented by the environment 100 uses $k$ hash functions, the prediction engine 130 uses the value stored in the matrix 122 for the output value r to predict a quantity of times $\hat{f}(d)$ the source data $d$ was the cause of a message received from one of the client devices 102a-c over the $k$ hash functions for the LDP protocol.

The prediction engine 130 determines a value in the matrix 122 for the output value $h_j(d)$ for each hash function. For instance, the prediction engine 130 receives the output values from the hash engine 126. The prediction engine 130 accesses the matrix 122 and determines the value $C[j,h_j(d)]$ stored in the matrix 122 for each output value $h_j(d)$, e.g., a total count of the $h_j(d)$th entry stored in the $j^{th}$ row corresponding to the hash function $h_j$ of the matrix 122.

The prediction engine 130 can use equation (5), below, to predict the quantity of times $\hat{f}(d)$ the source data was the cause of a message received from one of the client devices 102a-c over $k$ hash functions.

$$\hat{f}(d) = \sum_{j=1}^{k} \frac{C[j,h_j(d)] - \frac{n}{km}(p-q) - \frac{qn}{k}}{\left(1 - \frac{1}{m}\right)(p-q)} \qquad (5)$$

In equation (5), the $k$ hash functions are denoted as $H = \{h_j : D \to [m] : j \in [k]\}$. $p$, $q$, and $n$ are defined above. $C[j,h_j(d)]$ is the count of the $h_j(d)$th entry in the jth row in the matrix 122 corresponding to the hash function $h_j$.

The processing system 118 can perform an action using the predicted quantity of times $\hat{f}(d)$. For example, the processing system 118 can perform analytics using the predicted quantity of times $\hat{f}(d)$, generate instructions that cause presentation of the predicted quantity of times $\hat{f}(d)$, or perform another appropriate action. As an example, the processing system 118 can use an analysis engine 140 to evaluate the performance of the LDP protocol using the predicted quantity of times $\hat{f}(d)$, as described in more detail below.

The processing engine 118 can use an analysis engine 140 to evaluate the performance of different LDP protocols. In some implementations, the analysis engine 140 can evaluate different LDP protocols given a set of parameters for each LDP protocol. Thus, the analysis engine 140 can evaluate different LDP protocols that have not been implemented, i.e., whose operations have not been performed, by the environment 100. For example, given a set of parameters for an LDP protocol, the analysis engine 140 can make one or more inferences about the LDP protocol. The processing system 118 can perform one or more actions using the one or more inferences. As another example, given a set of parameters for an LDP protocol, the analysis engine 140 can determine a performance metric for the LDP protocol. As an example, the performance metric can characterize an accuracy of the LDP protocol and act as a theoretical performance guarantee. The accuracy of the LDP protocol can be represented by the variance of $\hat{f}(d)$, described in further detail below. Thus the analysis engine 140 can evaluate the performance of different LDP protocols prior to implementation of or performing the operations of the different LDP protocols.

In some implementations, the processing engine 118 can use the analysis engine 140 to evaluate the performance of an LDP protocol that has been implemented by the environment 100. In these implementations, the processing engine 119 can use the output(s) of the prediction engine 130, e.g., the predicted $\hat{f}(d)$ for the LDP protocol implemented by the environment 100, to evaluate the performance of the LDP protocol.

The analysis engine 140 can determine the variance of the sum of the hash output value for the source data $d$ appearing in the matrix 122 over $k$ hash functions. The sum of the hash output value for the source data $d$ appearing in the matrix 122 over $k$ hash functions is denoted as $\sum_{j=1}^{k} C[j,h_j(d)]$.

For example, the analysis engine 140 can use equation (6) below to determine the variance of the sum of the hash output value for the source data $d$ appearing in the matrix 122 over the $k$ hash functions.

$$Var(\sum_{j=1}^{k} C[j,h_j(d)]) = f(d)\left(p - \frac{p^2}{k}\right) + (n - f(d)) \left[\frac{p}{m}\left(1 - \frac{p}{k}\right) + \left(1 - \frac{1}{m}\right)q\left(1 - \frac{q}{k}\right)\right] + \frac{(p-q)^2}{km}(1 - \frac{1}{m})(\sum_{d^* \neq d}(f(d^*))^2) \qquad (6)$$

In equation (6), $p$, $q$, $k$, $n$, and $m$ are defined above. $f(d)$ is the true count of quantity of times the source data was the cause of a message over k hash functions. In some implementations where the analysis engine 140 evaluates the LDP protocol given the set of parameters for the LDP protocol, $f(d)$ is a target message frequency parameter. For example, the target message frequency parameter can be a default target message frequency. In some examples, the analysis engine 140 can receive data representing one or more values for the target message frequency parameter. The analysis system 140 can determine the variance of equation (6) for the different values for the target message frequency parameter, allowing for analysis of and/or updates to parameters of the LDP protocol based on the variance of equation (6) over different values for the target message frequency parameter. As an example, if $d$ represents a URL for a video, the target message frequency parameter can represent a target number of visits to the URL over a certain period of time.

In some implementations where the analysis engine 140 evaluates the LDP protocol given the predicted quantity of times $\hat{f}(d)$ the source data $d$ was the cause of a message over $k$ hash functions generated by the prediction engine 130, $f(d)$ is equal to $\hat{f}(d)$. That is, the predicted quantity of times $\hat{f}(d)$ the source data was the cause of a message over $k$ hash functions, described in equation (5), can be used as the true count $f(d)$ of equation (6).

Each d* $\neq$ $d$ is another potential source data d* that is not the source data $d$. Each $f(d^*)$ is a quantity of times the source data d* was the cause of a message. $\Sigma_{d^*\neq d}(f(d^*))^2$ is the sum of the quantity of times other source data besides the source data $d$ was the cause of a message over the $k$ hash functions.

In some implementations where the analysis engine 140 evaluates the LDP protocol given the set of parameters for the LDP protocol, each $f(d^*)$ is a parameter. In some examples, the analysis engine 140 can receive data representing one or more values for the parameter for each $f(d^*)$. In some examples, the parameter for each $f(d^*)$ can be a default value.

In some implementations where the analysis engine 140 evaluates the LDP protocol given the predicted quantity of times $\hat{f}(d)$ the source data $d$ was the cause of a message over $k$ hash functions generated by the prediction engine 130, the analysis engine 140 can determine each $f(d^*)$. For example, the analysis engine 140 can determine each $f(d^*)$ as $\hat{f}(d^*)$. That is, the analysis engine 140 can use equation (5) for each d* to determine each $\hat{f}(d^*)$.

In equation (6), the first term $f(d)(p - \frac{p^2}{k})$ represents the impact of the true count on the variance. The second term $(n - f(d))[\frac{p}{m}(1 - \frac{p}{k}) + (1 - \frac{1}{m})q(1 - \frac{q}{k})]$ characterizes how other source data impact the variance due to perturbation. The third term $\frac{(p-q)^2}{km}(1 - \frac{1}{m})(\sum_{d^*\neq d}(f(d^*))^2)$ characterizes the impact of hash collisions. Thus the variance of the total count of the output value over the one or more hash functions takes into account hash collisions and randomness of the LDP protocol.

The analysis engine 140 can also determine the variance of $\hat{f}(d)$, i.e., the variance of the quantity of times a source data $d$ was a cause of a message over the $k$ hash functions. The variance of $\hat{f}(d)$ can represent a measure of accuracy for the LDP protocol. For example, a higher variance can represent a higher probability that $\hat{f}(d)$ has a larger difference from the true count. A lower variance can represent a lower probability that $\hat{f}(d)$ has a larger difference from the true count. Thus a lower variance represents a more stable or more accurate $\hat{f}(d)$.

In some examples, the analysis engine 140 can determine the variance of the quantity of times the source data $d$ was a cause of a message over the one or more hash functions from the variance of the total count of the output value over the one or more hash functions. For example, the analysis engine 140 can use equation (7) below to determine the variance of the quantity of times the source data was a cause of a message over the one or more hash functions.

$$Var\left(\hat{f}(d)\right) = \frac{1}{(1-1/m)^2(p-q)^2}Var(\sum_{j=1}^{k} C[j, h_j(d)]) \qquad (7)$$

In equation (7), $p$, $q$, and $m$ are defined above. $Var(\sum_{j=1}^{k} C[j, h_j(d)])$ is defined above in equation (6).

In some examples, the analysis engine 140 can determine the variance of the quantity of times the source data was a cause of a message over the one or more hash functions using the size of the hashing domain, the probability, the value based on the differential privacy parameter, and the number of hash functions.

$$Var\left(\hat{f}(d)\right) = \frac{f(d)}{1-1/m}\left[\frac{1}{p-q} - \frac{p+q}{(p-q)k}\right] + n\left[\frac{p-\frac{p^2}{k}}{\left(1-\frac{1}{m}\right)^2(p-q)^2} + \frac{1}{\left(1-\frac{1}{m}\right)(p-q)} + \frac{p+q}{k\left(1-\frac{1}{m}\right)(p-q)}\right] + \frac{1}{k(m-1)}(\sum_{d^*\neq d}(f(d^*))^2)$$

$$(8)$$

In equation (8), $p$, $q$, $k$, $m$, $f(d)$, and d* are defined above.

For example, in some implementations where the analysis engine 140 evaluates the LDP protocol given the set of parameters for the LDP protocol, the variance of equations (7) or (8) determined by the analysis engine 140 can represent a performance metric for the LDP protocol, without requiring the LDP protocol to have been implemented by the environment 100. Thus the analysis engine 140 can evaluate different LDP protocols with different sets of parameters efficiently by determining the variance of equations (7) or (8) given the different sets of parameters.

In some examples where $f(d)$ is the target message frequency parameter, the analysis engine 140 can receive data representing one or more values for the target message frequency parameter. The analysis system 140 can determine the variance of equations (7) or (8) for the different values for the target message frequency parameter, allowing for analysis of and/or updates to parameters of the LDP protocol based on the variance of equations (7) or (8) over different values for the target message frequency parameter.

In some implementations where the analysis engine 140 evaluates the LDP protocol given the predicted quantity of times $\hat{f}(d)$ the source data $d$ was the cause of a message over $k$ hash functions generated by the prediction engine 130, the variance of equation (8) determined by the analysis engine 140 can represent a performance metric for the LDP protocol that has been implemented by the environment 100. For example, by using $\hat{f}(d)$ for the LDP protocol as $f(d)$, the analysis engine 140 can determine an estimate of the accuracy of the LDP protocol.

In some examples, the analysis engine 140 can further determine an estimate of the accuracy of the LDP protocol being evaluated by determining the standard deviation or confidence interval from the variance of equations (7) or (8).

The processing system 118 can perform actions such as selecting an LDP protocol out of multiple LDP protocols or updating parameters for the LDP protocol using the variance of the quantity of times the source data was a cause of a message over the hash functions. The processing system 118 can store data representing the parameters for different LDP protocols in a parameter database.

For example, the processing system 118 can compare different LDP protocols that have different parameters. As an example, the processing system 118 can compare the variance of the different LDP protocols. The processing system 118 can select the LDP protocol with the lowest variance. The processing system 118 can provide data specifying the selected LDP protocol to an external system, such as the client devices 102a-c.

As another example, the processing system 118 can compare the variance and communication cost of the different LDP protocols. For example, different LDP protocols can have hash functions with different hashing domain sizes. A larger hashing domain size can result in fewer hash collisions, but has a higher communication cost. The processing system 118 can evaluate the variance relative to the communication cost. The processing system 118 can select the LDP protocol to balance accuracy and the communication cost. For example, the processing system 118 can select the LDP protocol with the lowest variance that also has a communication cost that meets a threshold communication cost. The processing system 118 can provide data specifying the selected LDP protocol to an external system, such as the client devices 102a-c.

The processing system 118 can determine the variance for different LDP protocols without having to perform the operations of each LDP protocol, allowing for evaluating and selecting an LDP protocol while requiring fewer computing resources and less computing time than empirically determining the variance for each LDP protocol.

The processing system 118 can thus efficiently compare LDP protocols that have different parameters. For example, the processing system 118 can determine the variance for different combinations of parameters. The parameters can include the probability that the output value is included in a message, $p$, or the value derived from the differential privacy parameter, $q$. The parameters can also include the number of hash functions, $k$, or the hashing domain size, $m$.

The processing system 118 can thus be used to optimize LDP protocols. For example, the processing system 118 can determine to update one or more parameters of an LDP protocol based on the variance for the LDP protocol. In some implementations, the processing system 118 can update one or more parameters iteratively.

The processing system 118 can determine whether to update one or more parameters by determining whether the variance of the LDP protocol meets a threshold variance. If the variance of the LDP protocol meets a threshold variance, the processing system 118 can provide data specifying the LDP protocol, e.g., specifying the parameters of the LDP protocol, to an external system.

If the variance of the LDP protocol does not meet a threshold variance, the processing system 118 can update one or more parameters of the LDP protocol. For example, the processing system 118 can update one or more of the parameters, e.g., by changing one or more of the parameters by a predetermined amount.

After updating the one or more parameters of the LDP protocol, the processing system 118 can determine the variance for the updated LDP protocol. The processing system 118 can determine whether to update one or more parameters as described above until a condition is met. For example, the condition can be meeting the threshold variance, a threshold computing time, a threshold number of iterations, etc.

The processing system 118 and the modification system 112 are each an example of a system implemented as computer programs on one or more computers in one or more locations, in which the systems, components, and techniques described in this specification are implemented. The client devices A-C 102a-c can include personal computers, mobile communication devices, and other devices that can send and receive data over the network 132. The network 132, such as a local area network ("LAN"), wide area network ("WAN"), the Internet, or a combination thereof, connects the client devices A-C 102a-c, the modification system 112, and the processing system 118. The network 132 can be used to implement one or more encryption channels through which messages are communicated. The processing system 118, the modification system 112, or a combination of both, can use a single computer or multiple computers operating in conjunction with one another, including, for example, a set of remote computers deployed as a cloud computing service.

The processing system 118, the modification system 112, or both, can each include several different functional components, including the message modification engine 114, the shuffler engine 116, the matrix update engine 120, the decryption engine 124, the hash engine 126, the prediction engine 130, and the analysis engine 140. The message modification engine 114, the shuffler engine 116, the matrix update engine 120, the decryption engine 124, the hash engine 126, the prediction engine 130, the analysis engine 140, or a combination of these, can include one or more data processing apparatuses, can be implemented in code, or a combination of both. For instance, each of the message modification engine 114, the shuffler engine 116, the matrix update engine 120, the decryption engine 124, the hash engine 126, the prediction engine 130, and the analysis engine 140 can include one or more data processors and instructions that cause the one or more data processors to perform the operations discussed herein.

The various functional components of the processing system 118, the modification system 112, or both, can be installed on one or more computers as separate functional components or as different modules of a same functional component. For example, the components of the processing system 118, the modification system 112, or both, can be implemented as computer programs installed on one or more computers in one or more locations that are coupled to each through a network. In cloud-based systems for example, these components can be implemented by individual computing nodes of a distributed computing system.

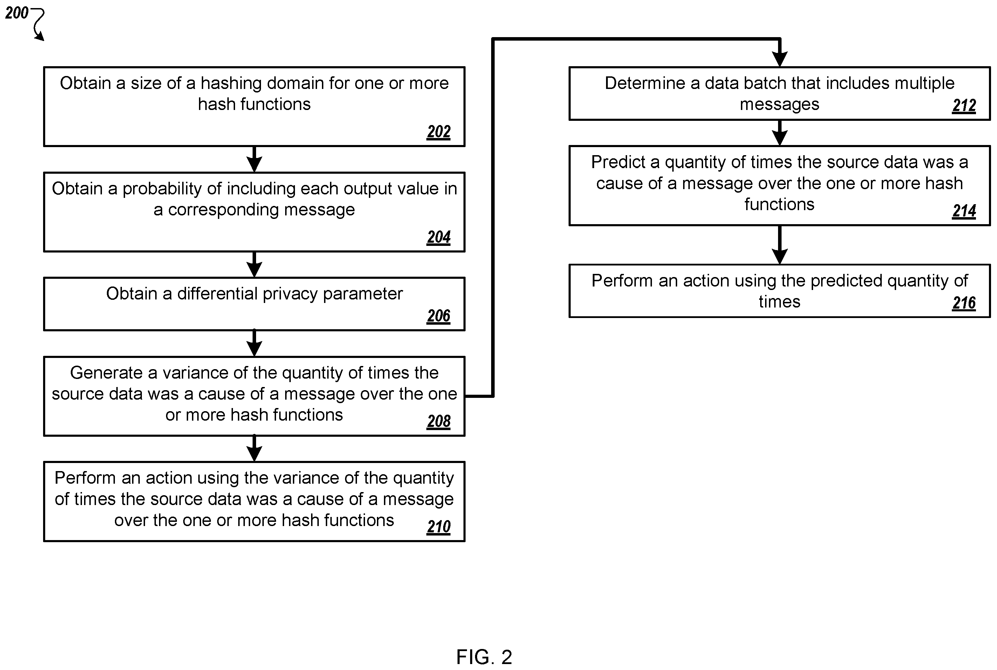

FIG. 2 is a flow diagram of an example process 200 for evaluating a protocol. For example, the process 200 can be used by the processing system 118, from the environment 100.

The system obtains a size of a hashing domain for one or more hash functions (202). Each hash function is configured to process source data to generate an output value. The output value can be in a hashing domain m for the hash functions. The hashing domain can have a size, the total number of integer values in the hashing domain. In some examples, the system can receive the size from a requesting device that sent the size of the hashing domain to the system. In some examples, the system can obtain the size of the hashing domain from a parameter database.

The system obtains a probability of including each output value in a corresponding message (204). In some examples, the system can receive the probability from a requesting device that sent the probability to the system. In some examples, the system can obtain the probability from a parameter database.

The system obtains a differential privacy parameter (206). The differential privacy parameter can affect a degree of security for data encoded in messages, privacy for the data, a communication cost for the messages, e.g., in computational resources, or a combination of two or more of these. In some examples, the system can receive the differential privacy parameter from a requesting device that sent the size of the hashing domain to the system. In some examples, the system can obtain the differential privacy parameter from a parameter database.

The system generates a variance of the quantity of times the source data was a cause of a message over the one or more hash functions (208). For example, the system can generate the variance using the size of the hashing domain, the probability, and a value based on the differential privacy parameter.

In some examples, the system can generate a variance of the quantity of times the source data was a cause of a message over the one or more hash functions using a number of hash functions in the one or more hash functions. The system can perform the generation of the variance of the quantity of times the source data was a cause of a message over the one or more hash functions using any appropriate process. Some examples of input values for the process, e.g., equation (8) above, can include the number of hash functions in the one or more hash functions, the size of the hashing domain, the probability, the value based on the differential privacy parameter, or a combination of two or more of these.

In some examples, the system can generate a variance of the quantity of times the source data was a cause of a message over the one or more hash functions using a variance of a total count of the output value over the one or more hash functions. The system can perform the generation of the variance of the quantity of times the source data was a cause of a message over the one or more hash functions using any appropriate process. That is, the system can generate the variance according to equation (7) described with reference to FIG. 1.

The system can perform the generation of the variance of the total count of the output value using any appropriate process. Some examples of input values for the process, e.g., equation (6) above, can include the size of the hashing domain, the probability, and the value based on the differential privacy parameter, or a combination of two or more of these.

In some implementations, the system performs an action using the variance of the quantity of times the source data was a cause of a message over the one or more hash functions (210).

For example, the action can include updating one or more parameters based on at least the variance of the quantity of times the source data was a cause of a message over the one or more hash functions. In some examples, the system can update one or more parameters so that the variance is lower for the updated LDP protocol.

The one or more parameters can be parameters of the LDP protocol, such as the probability, the differential privacy parameter, the size of the hashing domain, or a number of the one or more hash functions.

In some examples, the system can update one or more parameters based on the size of the hashing domain and the variance of the quantity of times the source data was a cause of a message over the one or more hash functions. For example, the system can determine updates to parameters that balance accuracy and communication cost. The system can update one or more parameters so that the variance is lower while the communication cost meets a threshold communication cost for the system.

The system can provide data specifying the one or more updated parameters to an external system, such as the client devices described above. The client devices can perform the operations of the updated LDP protocol that the system has verified to be more accurate than the prior LDP protocol.

As another example, the action can include providing instructions to another device, e.g., the requesting device. The instructions can cause the other device to present the variance of the quantity of times the source data was a cause of a message over the one or more hash functions on a display.

In some implementations, the system can further determine a data batch that includes multiple messages (212). Each message can be generated by processing a corresponding source data of a plurality of source data using one of the one or more hash functions to generate the output value. For example, the system can select, or a client device of the system can select, the hash function from a hash function database. The system can provide the source data as input to the selected hash function to obtain the output value.

The system can determine whether to include the output value in the message according to the probability. For example, if the system determines to include the output value in the message, the system can generate the message that includes a quantity of noise values and the output value. The system can generate the noise values using the hash function and message size as described above with reference to FIG. 1.

If the system determines not to include the output value in the message, the system can generate the message that includes a quantity of noise values.

In some examples, a system of one or more first computers can remove device specific data from the message. For instance, after generating the message whether with the output value or not, a modification system can receive the message. The modification system can remove the device specific data, and optionally other data, from the message. The modification system generates a data batch that includes the messages in a randomly shuffled order. For example, the modification system can use any appropriate process to generate the data batch that includes multiple messages at least some of which were generated by different client devices.

The system can predict a quantity of times the source data was a cause of a message over the one or more hash functions (214). The system can perform the prediction using any appropriate process. Some examples of input values for the process, e.g., equation (5) above, can include a total count of the output value, the size of the hashing domain, the probability, a number of messages in the multiple messages, and the value based on the differential privacy parameter, or a combination of two or more of these.

In some examples, the system can obtain the total count of the output value using a matrix that maintains anonymized data for messages. The matrix can maintain data for multiple hash functions. The system can store the data for messages corresponding to a hash function in a portion of the matrix that is specific to the hash function, e.g., using an identifier for the hash function. The system can determine the identifier using data from the message, e.g., an identifier included in the message, a mapping that indicates which devices use corresponding hash functions, or a combination of both.

After updating the matrix given data from multiple different messages, the system can receive a request for data specific to a request value. The system can use the request value to determine a corresponding hash value for the request value for each of the hash functions. The request value can be any appropriate value, e.g., the same as the source data $d$ or another source data of the plurality of source data.

In some implementations, the system can generate the variance of the quantity of times the source data was a cause of a message over the one or more hash functions using the quantity of times $\hat{f}(d)$ the source data was a cause of a message over the one or more hash functions. The system can perform the generation of the variance of the quantity of times the source data was a cause of a message over the one or more hash functions using any appropriate process. That is, the system can generate the variance according to equation (7) or equation (8) described with reference to FIG. 1, setting $\hat{f}(d) = \hat{f}(d)$.

The system can perform an action using the predicted quantity of times (216). For instance, the system can provide instructions to another device, e.g., a requesting device that sent the request value to the system. The instructions can cause the other device to present the predicted quantity of times on a display.

The order of operations in the process 200 described above is illustrative only, and the evaluating of a protocol can be performed in different orders. For example, the process 200 can obtain a differential privacy parameter, e.g., perform operation 206, before any of operations 202 or 204.

In some implementations, the process 200 can include additional operations, fewer operations, or some of the operations can be divided into multiple operations. For example, the process 200 can include operations 204, 206, 208 and either operation 210 or 212-216.

In some implementations, the device might execute a social media application, e.g., a native application or by accessing a web site. The device and the processing system can collaborate on data processing when the device provides data to the processing system. By using one or more processes described in this specification, the device can provide data, e.g., data records, to the processing system without sharing particular user data that is associated with a corresponding user.

For situations in which the systems discussed here collect personal information about people, or may make use of personal information, the people may be provided with an opportunity to control whether programs or features collect personal information, or to control whether and/or how the system operates. In addition, as described above, data is anonymized in one or more ways before it is stored or used, so that personally identifiable information is removed. For example, the message modification engine can remove any device or other identification data from messages received from the client devices A-C. The shuffler engine can randomly permute an order in which messages are included in a data batch to reduce a likelihood of personally identifiable information being inferred from the data batch.

In this specification, the term "database" is used broadly to refer to any collection of data: the data does not need to be structured in any particular way, or structured at all, and it can be stored on storage devices in one or more locations. A database can be implemented on any appropriate type of memory.

In this specification the term "engine" is used broadly to refer to a software-based system, subsystem, or process that is programmed to perform one or more specific functions. Generally, an engine will be implemented as one or more software modules or components, installed on one or more computers in one or more locations. In some instances, one or more computers will be dedicated to a particular engine. In some instances, multiple engines can be installed and running on the same computer or computers.

This specification uses the term "configured to" in connection with systems, apparatus, and computer program components. That a system of one or more computers is configured to perform particular operations or actions means that the system has installed on it software, firmware, hardware, or a combination of them that in operation cause the system to perform those operations or actions. That one or more computer programs is configured to perform particular operations or actions means that the one or more programs include instructions that, when executed by data processing apparatus, cause the apparatus to perform those operations or actions. That specialpurpose logic circuitry is configured to perform particular operations or actions means that the circuitry has electronic logic that performs those operations or actions.

A number of implementations have been described. Nevertheless, it will be understood that various modifications can be made without departing from the scope of the disclosure. For example, various forms of the flows shown above can be used, with operations re-ordered, added, or removed.

Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible non-transitory program carrier for execution by, or to control the operation of, a data processing apparatus. Alternatively or in addition, the program instructions can be encoded on an artificially-generated propagated signal, e.g., a machine-generated electrical, optical, or electromagnetic signal, that is generated to encode information for transmission to a suitable receiver apparatus for execution by a data processing apparatus. One or more computer storage media can include a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can be or include special purpose logic circuitry, e.g., a field programmable gate array ("FPGA") or an application-specific integrated circuit ("ASIC"). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can be performed by, and apparatus can also be implemented as, special purpose logic circuitry, e.g., a field programmable gate array ("FPGA") or an application-specific integrated circuit ("ASIC").

Computers suitable for the execution of a computer program include, by way of example, general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. A computer can be embedded in another device, e.g., a mobile telephone, a smart phone, a headset, a personal digital assistant ("PDA"), a mobile audio or video player, a game console, a Global Positioning System ("GPS") receiver, or a portable storage device, e.g., a universal serial bus ("USB") flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented on a computer having a display device, e.g., a liquid crystal display ("LCD"), an organic light emitting diode ("OLED") or other monitor, for displaying information to the user and a keyboard and a pointing device, e.g., a mouse or a trackball or a touchscreen, by which the user can provide input to the computer. Other kinds of devices can be used to provide for interaction with a user as well. For example, feedback provided to the user can be any form of sensory feedback, e.g., visual feedback, auditory feedback, or tactile feedback; and input from the user can be received in any form, including acoustic, speech, or tactile input. In some examples, a computer can interact with a user by sending documents to and receiving documents from a device that is used by the user; for example, by sending web pages to a web browser on a user's device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other. In some implementations, a server transmits data, e.g., an Hypertext Markup Language ("HTML") page, to a user device, e.g., for purposes of displaying data to and receiving user input from a user device, which acts as a client. Data generated at the user device, e.g., a result of user interaction with the user device, can be received from the user device at the server.

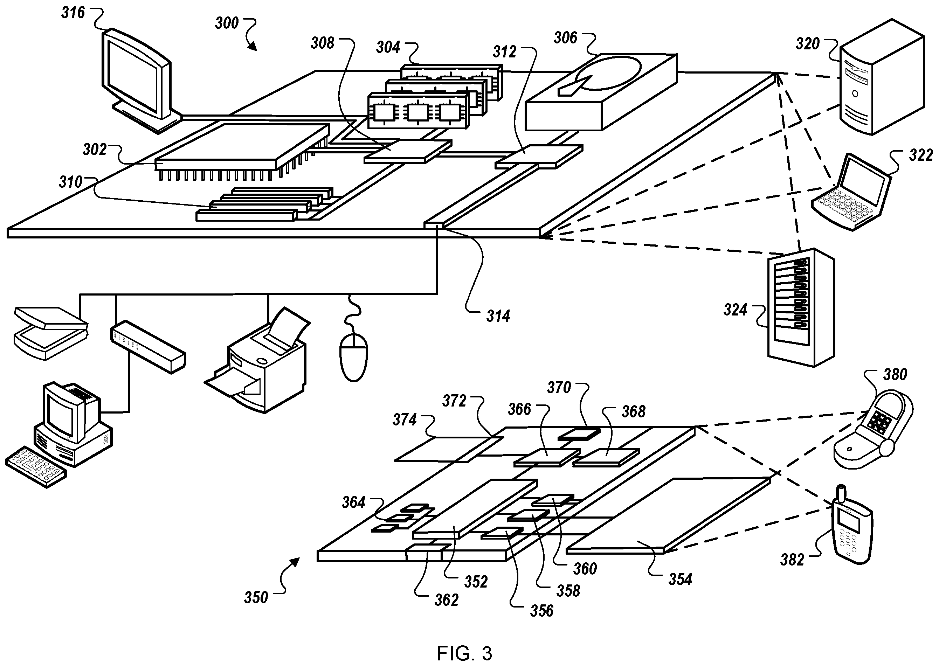

FIG. 3 is a block diagram of computing devices 300, 350 that may be used to implement the systems and methods described in this specification, as either a client or as a server system or plurality of server systems. Computing device 300 is intended to represent various forms of digital computers, such as laptops, desktops, workstations, personal digital assistants, servers, blade servers, mainframes, and other appropriate computers. Computing device 350 is intended to represent various forms of mobile devices, such as personal digital assistants, cellular telephones, smartphones, smartwatches, head-worn devices, and other similar computing devices. The components shown here, their connections and relationships, and their functions, are meant to be exemplary only, and are not meant to limit implementations described and/or claimed in this specification.

Computing device 300 includes a processor 302, memory 304, a storage device 306, a high-speed interface 308 connecting to memory 304 and high-speed expansion ports 310, and a low speed interface 312 connecting to low speed bus 314 and storage device 306. Each of the components 302, 304, 306, 308, 310, and 312, are interconnected using various busses, and may be mounted on a common motherboard or in other manners as appropriate. The processor 302 can process instructions for execution within the computing device 300, including instructions stored in the memory 304 or on the storage device 306 to display graphical information for a GUI on an external input/output device, such as display 316 coupled to high speed interface 308. In other implementations, multiple processors and/or multiple buses may be used, as appropriate, along with multiple memories and types of memory. Also, multiple computing devices 300 may be connected, with each device providing portions of the necessary operations (e.g., as a server bank, a group of blade servers, or a multi-processor system).

The memory 304 stores information within the computing device 300. In one implementation, the memory 304 is a computer-readable medium. In one implementation, the memory 304 is a volatile memory unit or units. In another implementation, the memory 304 is a non-volatile memory unit or units.

The storage device 306 is capable of providing mass storage for the computing device 300. In one implementation, the storage device 306 is a computer-readable medium. In various different implementations, the storage device 306 may be a floppy disk device, a hard disk device, an optical disk device, or a tape device, a flash memory or other similar solid state memory device, or an array of devices, including devices in a storage area network or other configurations. In one implementation, a computer program product is tangibly embodied in an information carrier. The computer program product contains instructions that, when executed, perform one or more methods, such as those described above. The information carrier is a computer- or machine-readable medium, such as the memory 304, the storage device 306, or memory on processor 302.

The high speed controller 308 manages bandwidth-intensive operations for the computing device 300, while the low speed controller 312 manages lower bandwidth-intensive operations. Such allocation of duties is exemplary only. In one implementation, the high-speed controller 308 is coupled to memory 304, display 316 (e.g., through a graphics processor or accelerator), and to high-speed expansion ports 310, which may accept various expansion cards (not shown). In the implementation, low-speed controller 312 is coupled to storage device 306 and low-speed expansion port 314. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 300 may be implemented in a number of different forms, as shown in the figure. For example, it may be implemented as a standard server 320, or multiple times in a group of such servers. It may also be implemented as part of a rack server system 324. In addition, it may be implemented in a personal computer such as a laptop computer 322. Alternatively, components from computing device 300 may be combined with other components in a mobile device (not shown), such as device 350. Each of such devices may contain one or more of computing device 300, 350, and an entire system may be made up of multiple computing devices 300, 350 communicating with each other.

Computing device 350 includes a processor 352, memory 364, an input/output device such as a display 354, a communication interface 366, and a transceiver 368, among other components. The device 350 may also be provided with a storage device, such as a microdrive or other device, to provide additional storage. Each of the components 350, 352, 364, 354, 366, and 368, are interconnected using various buses, and several of the components may be mounted on a common motherboard or in other manners as appropriate.

The processor 352 can process instructions for execution within the computing device 350, including instructions stored in the memory 364. The processor may also include separate analog and digital processors. The processor may provide, for example, for coordination of the other components of the device 350, such as control of user interfaces, applications run by device 350, and wireless communication by device 350.

Processor 352 may communicate with a user through control interface 358 and display interface 356 coupled to a display 354. The display 354 may be, for example, a TFT LCD display or an OLED display, or other appropriate display technology. The display interface 356 may comprise appropriate circuitry for driving the display 354 to present graphical and other information to a user. The control interface 358 may receive commands from a user and convert them for submission to the processor 352. In addition, an external interface 362 may be provided in communication with processor 352, so as to enable near area communication of device 350 with other devices. External interface 362 may provide, for example, for wired communication (e.g., via a docking procedure) or for wireless communication (e.g., via Bluetooth or other such technologies).

The memory 364 stores information within the computing device 350. In one implementation, the memory 364 is a computer-readable medium. In one implementation, the memory 364 is a volatile memory unit or units. In another implementation, the memory 364 is a non-volatile memory unit or units. Expansion memory 374 may also be provided and connected to device 350 through expansion interface 372, which may include, for example, a SIMM card interface. Such expansion memory 374 may provide extra storage space for device 350, or may also store applications or other information for device 350. Specifically, expansion memory 374 may include instructions to carry out or supplement the processes described above, and may include secure information also. Thus, for example, expansion memory 374 may be provided as a security module for device 350, and may be programmed with instructions that permit secure use of device 350. In addition, secure applications may be provided via the SIMM cards, along with additional information, such as placing identifying information on the SIMM card in a nonhackable manner.

The memory may include for example, flash memory and/or MRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 364, expansion memory 374, or memory on processor 352.

Device 350 may communicate wirelessly through communication interface 366, which may include digital signal processing circuitry where necessary. Communication interface 366 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radiofrequency transceiver 368. In addition, short-range communication may occur, such as using a Bluetooth, Wi-Fi, or other such transceiver (not shown). In addition, GPS receiver module 370 may provide additional wireless data to device 350, which may be used as appropriate by applications running on device 350.

Device 350 may also communicate audibly using audio codec 360, which may receive spoken information from a user and convert it to usable digital information. Audio codec 360 may likewise generate audible sound for a user, such as through a speaker, e.g., in a handset of device 350. Such sound may include sound from voice telephone calls, may include recorded sound (e.g., voice messages, music files, etc.) and may also include sound generated by applications operating on device 350.

The computing device 350 may be implemented in a number of different forms, as shown in the figure. For example, it may be implemented as a cellular telephone 380. It may also be implemented as part of a smartphone 382, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

In addition to the embodiments of the attached claims and the embodiments described above, the following numbered embodiments are also innovative.

Embodiment 1 is a computer-implemented method comprising: obtaining a size of a hashing domain for one or more hash functions, each configured to process source data to generate an output value; obtaining a probability of including each output value in a corresponding message; obtaining a differential privacy parameter; and generating a variance of the quantity of times the source data was a cause of a message over the one or more hash functions using the size of the hashing domain, the probability, and a value based on the differential privacy parameter.

Embodiment 2 is the method of embodiment 1, wherein generating the variance of the quantity of times the source data was a cause of a message over the one or more hash functions further comprises using a number of hash functions in the one or more hash functions.

Embodiment 3 is the method of any of embodiments 1-2, wherein generating the variance of the quantity of times the source data was a cause of a message over the one or more hash functions further comprises using a variance of a total count of the output value over the one or more hash functions.

Embodiment 4 is the method of embodiment 3, wherein the variance of the total count of the output value over the one or more hash functions is generated using the size of the hashing domain, the probability, and the value based on the differential privacy parameter.

Embodiment 5 is the method of any of embodiments 1-4, further comprising performing an action using the variance of the quantity of times the source data was a cause of a message over the one or more hash functions.

Embodiment 6 is the method of embodiment 5, wherein the action comprises updating one or more parameters based on at least the variance of the quantity of times the source data was a cause of a message over the one or more hash functions.

Embodiment 7 is the method of embodiment 6, wherein updating one or more parameters based on at least the variance of the quantity of times the source data was a cause of a message over the one or more hash functions comprises updating the one or more parameters based on the size of the hashing domain and the variance of the quantity of times the source data was a cause of a message over the one or more hash functions.

Embodiment 8 is the method of any of embodiments 6-7, wherein the one or more parameters comprise any one or more of: the probability, the differential privacy parameter, the size of the hashing domain, or a number of the one or more hash functions.

Embodiment 9 is the method of any of embodiments 6-8, further comprising providing data specifying the one or more updated parameters to an external system.

Embodiment 10 is the method of any of embodiments 1-9, further comprising: determining a data batch comprising a plurality of messages, each generated by processing a corresponding source data of a plurality of source data using one of the one or more hash functions to generate the output value; and predicting a quantity of times the source data was a cause of a message over the one or more hash functions by using a total count of the output value, the size of the hashing domain, the probability, a number of messages in the plurality of messages, and the value based on the differential privacy parameter.

Embodiment 11 is the method of embodiment 10, wherein generating the variance of the quantity of times the source data was a cause of a message over the one or more hash functions further comprises using the quantity of times the source data was a cause of a message over the one or more hash functions.

Embodiment 12 is the method of any of embodiments 10-11, wherein each of the plurality of messages is further generated by: determining whether to include the output value in the message according to the probability; and in response to determining to include the output value in the message, generating the message that includes a quantity of noise values and the output value.

Embodiment 13 is the method of any of embodiments 10-11, wherein each of the plurality of messages is further generated by: determining whether to include the output value in the message according to the probability; and in response to determining not to include the output value in the message, generating the message that includes a quantity of noise values.

Embodiment 14 is the method of any of embodiments 10-13, further comprising obtaining the total count of the output value using a matrix that maintains anonymized data for messages.

Embodiment 15 is the method of any of embodiments 10-14, further comprising performing an action using the predicted quantity of times the source data was the cause of a message over the one or more hash functions.

Embodiment 16 is a system comprising: one or more computers and one or more storage devices storing instructions that are operable, when executed by the one or more computers, to cause the one or more computers to perform the method of any one of embodiments 1 to 15.

Embodiment 17 is a computer program carrier encoded with a computer program, the program comprising instructions that are operable, when executed by one or more computers, to cause the one or more computers to perform the method of any one of embodiments 1 to 15.

Embodiment 18 is the computer program carrier of embodiment 17, wherein the computer program carrier is a propagated, e.g., non-transitory, signal.

While this specification contains many specific implementation details, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some instances be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the implementations described above should not be understood as requiring such separation in all implementations, and it should be understood that the described program components and systems can generally be integrated together in a single software product or packaged into multiple software products.

In each instance where an HTML file is mentioned, other file types or formats may be substituted. For instance, an HTML file may be replaced by an XML, JSON, plain text, or other types of files. Moreover, where a table or hash table is mentioned, other data structures, such as spreadsheets, relational databases, or structured files, may be used.

Particular implementations of the invention have been described. Other implementations are within the scope of the following claims. For example, the operations recited in the claims, described in the specification, or depicted in the figures can be performed in a different order and still achieve desirable results. In some implementations, multitasking and parallel processing may be advantageous.

**Claims**

1. A computer-implemented method comprising:

   obtaining (202) a size of a hashing domain for one or more hash functions, each configured to process source data to generate an output value;
   obtaining (204) a probability of including each output value in a corresponding message;
   obtaining (206) a differential privacy parameter; and
   generating (208) a variance of the quantity of times the source data was a cause of a message over the one or more hash functions using the size of the hashing domain, the probability, and a value based on the differential privacy parameter.

2. The method of claim 1, wherein generating the variance of the quantity of times the source data was a cause of a message over the one or more hash functions further comprises one of the following:

> using a number of hash functions in the one or more hash functions; or
> using a variance of a total count of the output value over the one or more hash functions.

3.  The method of claim 2, wherein the variance of the total count of the output value over the one or more hash functions is generated using the size of the hashing domain, the probability, and the value based on the differential privacy parameter.

4.  The method of any of claims 1 to 3, further comprising performing (210) an action using the variance of the quantity of times the source data was a cause of a message over the one or more hash functions.

5.  The method of claim 4, wherein the action comprises updating one or more parameters based on at least the variance of the quantity of times the source data was a cause of a message over the one or more hash functions.

6.  The method of claim 5, wherein updating one or more parameters based on at least the variance of the quantity of times the source data was a cause of a message over the one or more hash functions comprises updating the one or more parameters based on the size of the hashing domain and the variance of the quantity of times the source data was a cause of a message over the one or more hash functions.

7.  The method of claim 5 or 6, wherein the one or more parameters comprise any one or more of: the probability, the differential privacy parameter, the size of the hashing domain, or a number of the one or more hash functions.

8.  The method of claim any of claims 5 to 7, further comprising providing data specifying the one or more updated parameters to an external system.

9.  The method of any of claims 1 to 8, further comprising:

> determining (212) a data batch comprising a plurality of messages, each generated by processing a corresponding source data of a plurality of source data using one of the one or more hash functions to generate the output value; and
> predicting (214) a quantity of times the source data was a cause of a message over the one or more hash functions by using a total count of the output value, the size of the hashing domain, the probability, a number of messages in the plurality of messages, and the value based on the differential privacy parameter.

10. The method of claim 9, wherein generating the variance of the quantity of times the source data was a cause of a message over the one or more hash functions further comprises using the quantity of times the source data was a cause of a message over the one or more hash functions.

11. The method of claim 9 or 10, wherein each of the plurality of messages is further generated by:

> determining whether to include the output value in the message according to the probability;
> in response to determining to include the output value in the message, generating the message that includes a quantity of noise values and the output value; and
> in response to determining not to include the output value in the message, generating the message that includes a quantity of noise values.

12. The method of any of claims 9 to 11, further comprising obtaining the total count of the output value using a matrix that maintains anonymized data for messages.

13. The method of any of claims 9 to 12, further comprising performing (216) an action using the predicted quantity of times the source data was the cause of a message over the one or more hash functions.

14. A system comprising one or more computers and one or more storage devices on which are stored instructions that are operable, when executed by the one or more computers, to execute the computer-implemented method according to any of claims 1 to 13.

15. One or more computer storage media encoded with instructions that, when executed by one or more computers, cause the one or more computers to execute the computer-implemented method according to any of claims 1 to 13.

FIG. 1

FIG. 2

200

Obtain a size of a hashing domain for one or more hash functions **202**

↓

Obtain a probability of including each output value in a corresponding message **204**

↓

Obtain a differential privacy parameter **206**

↓

Generate a variance of the quantity of times the source data was a cause of a message over the one or more hash functions **208**

↓

Perform an action using the variance of the quantity of times the source data was a cause of a message over the one or more hash functions **210**

Determine a data batch that includes multiple messages **212**

↓

Predict a quantity of times the source data was a cause of a message over the one or more hash functions **214**

↓

Perform an action using the predicted quantity of times **216**

FIG. 3

Europäisches
Patentamt

European
Patent Office

Office européen
des brevets

**Application Number**

**EP 25 18 5869**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIANJIN FANG ET AL: "Local differential privacy for human-centered computing", EURASIP JOURNAL ON WIRELESS COMMUNICATIONS AND NETWORKING, BIOMED CENTRAL LTD, LONDON, UK, vol. 2020, no. 1, 17 March 2020 (2020-03-17), pages 1-12, XP021274014, DOI: 10.1186/S13638-020-01675-8 * section 4 * ----- | 1-15 | INV. H04L9/06 |
| X | H\'EBER H ARCOLEZI ET AL: "Frequency Estimation of Evolving Data Under Local Differential Privacy", ARXIV.ORG, CORNELL UNIVERSITY LIBRARY, 201 OLIN LIBRARY CORNELL UNIVERSITY ITHACA, NY 14853, 1 October 2022 (2022-10-01), XP091332159, * section 4 * ----- | 1-15 | |
| X | MEIFAN ZHANG ET AL: "Local Differentially Private Frequency Estimation based on Learned Sketches", ARXIV.ORG, CORNELL UNIVERSITY LIBRARY, 201 OLIN LIBRARY CORNELL UNIVERSITY ITHACA, NY 14853, 20 November 2022 (2022-11-20), XP091372978, * section 4 * ----- -/-- | 1-4,9-15 | TECHNICAL FIELDS SEARCHED (IPC) H04L |

The present search report has been drawn up for all claims

| Place of search | Date of completion of the search | Examiner |
|---|---|---|
| Munich | 5 November 2025 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 18 5869

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG YUE ET AL: "Frequency Estimation Mechanisms Under [epsilon][delta]-Utility-Optimized Local Differential Privacy", IEEE TRANSACTIONS ON EMERGING TOPICS IN COMPUTING, IEEE, vol. 12, no. 1, 26 January 2023 (2023-01-26), pages 316-327, XP011963629, DOI: 10.1109/TETC.2023.3238839 [retrieved on 2023-01-26] * section IV * | 1-4, 13-15 | |
| | ----- | | |
| | | | **TECHNICAL FIELDS SEARCHED (IPC)** |

The present search report has been drawn up for all claims

| Place of search | Date of completion of the search | Examiner |
|---|---|---|
| Munich | 5 November 2025 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................................................
& : member of the same patent family, corresponding document

EPO FORM 1503 03.82 (P04C01)